# FASCICULE DE BREVET EUROPEEN

(11) **EP 2 019 773 B1**
(45) Date de publication et mention de la délivrance du brevet: **16.05.2012**
(21) Numéro de dépôt: 07725327.6
(22) Date de dépôt: 16.05.2007
(51) Int. Cl.: B64C 1/18, B64C 1/06

(54) **PLANCHER PRESSURISE D'AERONEF**
DRUCKDICHTER BODEN FÜR LUFTFAHRZEUG
PRESSURE-SEALED FLOOR FOR AIRCRAFT

(30) Priorité: 23.05.2006 FR 0651892
(43) Date de publication de la demande: 04.02.2009
(73) Titulaire: AIRBUS OPERATIONS (S.A.S), 31060 Toulouse (FR)
(72) Inventeur: GAUTHIE, Laurent, F-31170 Tounefeuille (FR); BERNADET, Philippe, F-31770 Colomiers (FR)
(74) Mandataire: Lebrette, Camille
(86) Numéro de dépôt international: PCT/EP2007/004412
(87) Numéro de publication internationale: WO 2007/134790

(56) Documents cités:
- EP-A1- 0 408 432
- FR-A- 512 728
- GB-A- 110 433
- US-A- 3 256 670
- US-A- 4 909 655
- US-A- 5 553 437

## Description

L'invention concerne une plancher pressurisé pour aéronef muni d'une case de train principal. Plus précisément, l'invention concerne la semelle inférieure d'une poutre pour plancher pressurisé, destinée à supporter une membrane courbe dudit plancher.

Le plancher pressurisé selon l'invention trouve des applications pour la fabrication d'aéronef, et plus particulièrement du tronçon d'aéronef muni de la case de train principal située juste derrière le caisson central de voilure. En effet, au niveau de ce tronçon d'aéronef les poutres pour plancher ont une forme particulière pour permettre d'une part de supporter sur une face supérieure, le plancher cabine sur lequel sont installés les rails de sièges pour passagers et, d'autre part, d'assurer l'étanchéité entre l'extérieur et l'intérieur de l'aéronef, au niveau de la face inférieure.

Actuellement, comme le montre EP-A-0 408 432, dans un tronçon d'aéronef comportant une case de train principal, le plancher pressurisé comporte une série de poutres métalliques disposées longitudinalement par rapport à l'axe de l'aéronef, et parallèlement les unes aux autres. Chaque poutre comporte une semelle supérieure, destinée à supporter les rails de siège et une semelle inférieure, destinée à supporter des membranes courbes assurant l'étanchéité du plancher cabine. Une âme verticale relie la semelle supérieure à la semelle inférieure. La semelle inférieure est munie de deux pieds obliques disposés de part et d'autre de l'âme verticale de manière à former un V inversé permettant d'offrir, au niveau de la face dirigée vers la semelle supérieure, une surface d'appui tangente à la courbure des membranes courbes.

En vol, les pieds obliques de la semelle inférieure sont soumis à des contraintes de dépliage. Par contrainte de dépliage, on entend les efforts tendant à aplanir la poutre, à savoir les efforts de compression, forçant les pieds obliques dans le prolongement de l'âme verticale, et les efforts d'arrachement, tendant à écarter les pieds l'un de l'autre pour les étendre dans un plan horizontal. Le noeud de jonction entre les deux pieds obliques et l'âme verticale est donc une zone particulièrement fragile de la poutre pour plancher pressurisé.

Actuellement, dans le domaine de l'aéronautique, on cherche à utiliser les matériaux composites pour fabriquer tout ou partie des pièces rentrant dans la fabrication d'un aéronef, notamment pour diminuer la masse globale de l'aéronef. Cependant, il n'est actuellement pas possible d'envisager de réaliser une telle poutre pour plancher pressurisé en matériau composite, puisqu'un tel matériau est connu pour avoir une résistance moindre aux contraintes de dépliage.

Dans l'invention, on cherche à fournir un alternative aux poutres pour plancher pressurisé telles qu'elles sont connues dans l'état de la technique, qui conviennent notamment à l'utilisation des matériaux composites.

Pour cela, dans l'invention, on propose de réaliser un plancher pressurisé muni de poutres dont les surfaces d'appui obliques de la semelle inférieure, destinées à supporter les membranes courbes du plancher pressurisé, sont prolongées par une pièce intermédiaire de manière à refermer le volume de la semelle inférieure. La semelle inférieure des poutres forme donc une structure fermée dans laquelle les efforts s'exerçant sur les surfaces d'appui obliques sont rebouclés. La semelle inférieure selon l'invention comporte au moins trois éléments délimitant un volume fermé. La forme de la semelle inférieure permet de faire travailler les surfaces d'appui obliques principalement au niveau de leur liaison avec la pièce intermédiaire, de sorte que le noeud de jonction entre les surfaces d'appui obliques et l'âme verticale ne tend plus à casser. La pièce intermédiaire limite les mouvements des deux surfaces d'appui obliques, et notamment les mouvements d'arrachement. Une telle forme convient donc particulièrement à l'utilisation de matériaux composites.

L'invention à donc pour objet - un plancher pressurisé selon la revendication 1. Chaque poutre comporte une semelle supérieure, une âme verticale et une semelle inférieure, la semelle inférieure étant munie de deux pieds obliques disposés de part et d'autre de l'âme verticale et présentant une surface d'appui sur laquelle les membranes pressurisées courbes sont fixées, caractérisé en ce que les poutres sont en matériau composite et en ce que la semelle inférieure des poutres comporte un élément de liaison reliant les deux pieds obliques, de manière à ce que ladite semelle inférieure présente une section fermée.

Selon un exemple de réalisation particulier du plancher selon l'invention, l'élément de liaison comporte une surface horizontale, deux rebords de liaison opposés de ladite surface horizontale étant chacun solidaires d'une extrémité basse d'un pied oblique, de manière à ce que la section fermée forme un triangle.

Dans un autre exemple de réalisation, l'élément de liaison peut comporter deux surfaces obliques, un rebord de liaison de chaque surface oblique étant solidaire d'une extrémité basse d'un pied oblique, les deux surfaces obliques étant solidaires l'une de l'autre par leurs rebords de convergence opposés aux rebords de liaison, de manière à ce que la section fermée forme un losange. Il est également possible de réaliser d'autres formes de section fermée pour la semelle inférieure, tel qu'un hexagone, en multipliant le nombre de surfaces obliques et/ou horizontales de l'élément de liaison.

Avantageusement, l'âme verticale traverse la section fermée. En effet, la présence de l'âme verticale dans le prolongement du noeud de jonction entre ladite âme et les deux pieds obliques, jusque dans le volume interne de la semelle inférieure, permet de reprendre au moins partiellement les efforts auxquels les surfaces d'appui de la semelle inférieure sont soumises.

Préférentiellement, la section fermée est creuse. Bien entendu, il est possible de réaliser une semelle inférieure dont la section fermée est pleine, mais cela peut être préjudiciable du point de vu de la masse totale de la poutre et donc du plancher pressurisé muni de telles poutres. Par ailleurs, le fait d'utiliser une section fermée pleine peut rendre plus complexe la fixation des membranes courbes sur les surfaces d'appui de la semelle inférieure.

Dans un exemple particulier de réalisation du plancher selon l'invention, il est possible de prévoir un renfort logé dans le volume interne de la section fermée. Un tel renfort peut notamment être réalisé en matériau composite. Par exemple, le contour externe du renfort épouse entièrement le contour interne de la section fermée. Il est également possible d'utiliser un renfort dont le contour externe n'épouse que partiellement le contour interne des surfaces d'appui et des rebords de l'élément de liaison. D'une manière générale, le renfort est particulièrement utile au niveau du noeud de jonction entre l'âme verticale et les pieds obliques.

Avantageusement, l'élément de liaison comporte au moins un orifice traversant débouchant dans le volume interne de la section fermée. Un tel orifice traversant permet notamment de faciliter la fixation des membranes courbes sur les surfaces d'appui de la semelle inférieure.

L'invention sera mieux comprise à la lecture de la description qui suit et à l'examen des figures qui l'accompagnent. Celles-ci sont présentées à titre indicatif et nullement limitatif de l'invention. Les figures représentent :
- Figure 1 : une représentation schématique en coupe transversale d'une poutre ;
- Figure 2 : une représentation schématique en perspective d'une poutre selon la figure 1 ;
- Figure 3 : une vue de dessous d'un ensemble de deux poutres reliées l'une à l'autre par une membrane courbe pour plancher pressurisé ;
- Figures 4A et 4B : des représentations schématiques en coupe d'un autre exemple de réalisation d'une semelle inférieure selon l'invention ;
- Figures 5A et 5B : des représentations schématiques en coupe d'un autre exemple de réalisation d'une semelle inférieure selon l'invention ;
- Figures 6A et 6B : deux exemples de réalisation d'un renfort pour semelle inférieure selon l'invention.

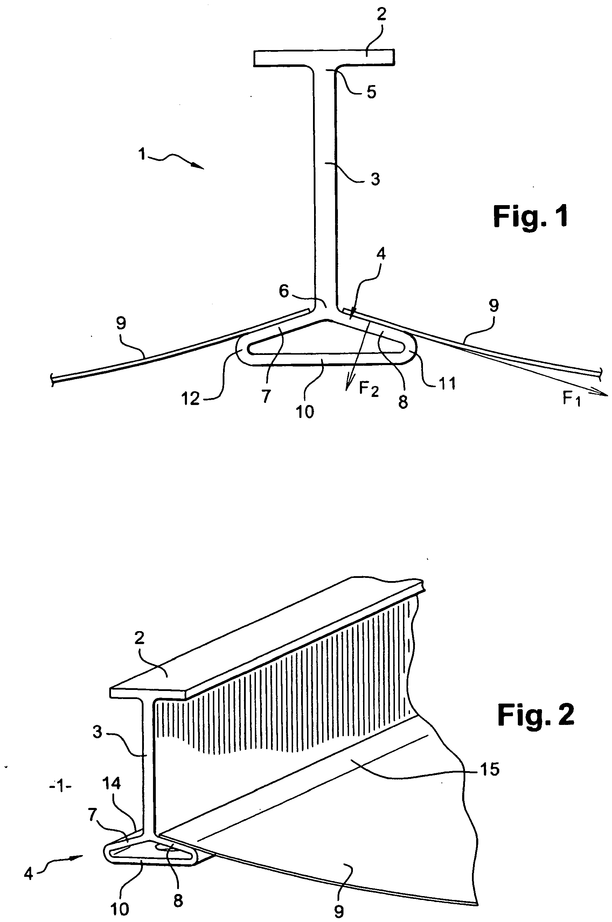

Sur la figure 1 est représentée une poutre du plancher pressurisé selon l'invention.

La poutre 1 est munie d'une semelle supérieure 2, d'une âme verticale 3 et d'une semelle inférieure 4. Une extrémité haute 5 de l'âme verticale 3 est reliée à la semelle supérieure 2, une extrémité basse 6 de l'âme verticale 3 étant reliée à la semelle inférieure 4.

Comme cela est visible sur la figure 2, d'une manière classique, la semelle supérieure 2 forme une surface plane horizontale, destinée à supporter des rails, tels que des rails pour sièges passagers.

L'âme verticale 3 s'étend verticalement par rapport au plan de la semelle supérieure 2.

La semelle inférieure 4 comporte deux pieds obliques 7, 8, disposés de part et d'autre de l'âme verticale 3, et reliés chacun à l'extrémité basse 6 de ladite âme verticale 3. L'extrémité basse 6 de l'âme verticale forme ainsi un noeud de jonction entre l'âme verticale 3 et la semelle inférieure 4.

La forme des pieds obliques 7, 8 est la même que celle des pieds des semelles inférieures de l'état de la technique. Chaque pied oblique 7, 8 présente donc au niveau de la face supérieure, c'est-à-dire dirigée vers la semelle supérieure 2, une surface d'appui courbe 14, 15 sur laquelle vient reposer une membrane courbe 9 du plancher pressurisé auquel la poutre 1 selon l'invention est destinée à appartenir.

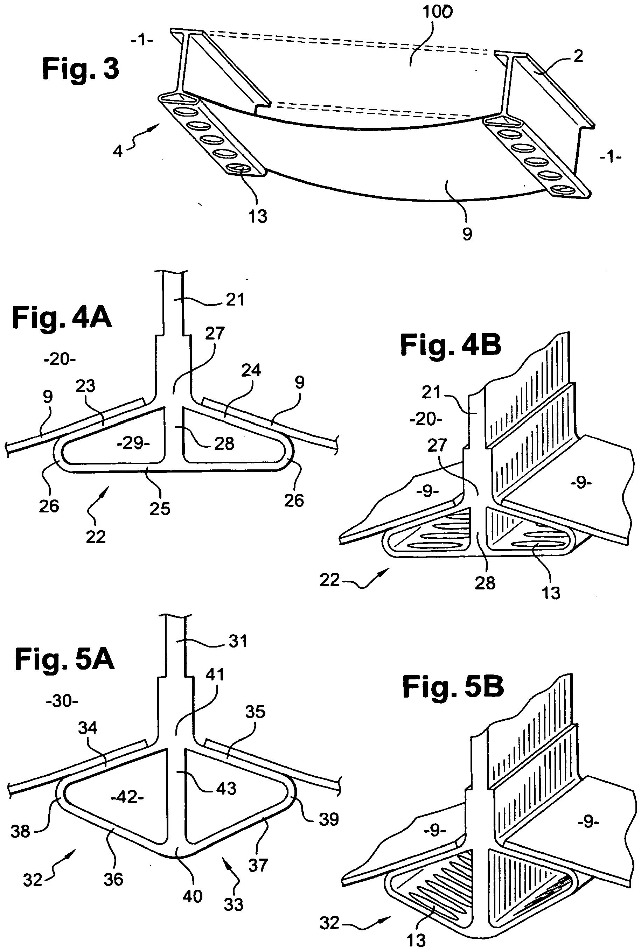

Comme cela est visible sur la figure 3, dans un plancher pressurisé deux poutres 1 adjacentes sont reliées l'une à l'autre, au niveau de la semelle inférieure 4, par une membrane courbe 9 et au niveau de la semelle supérieure 2 par un panneau plancher 100.

Les membranes courbes 9 du plancher pressurisé sont soumises à des efforts d'arrachement F1 et des efforts de compression F2, lesdits efforts étant transmis aux surfaces d'appui courbes 14, 15 et donc aux pieds obliques 7, 8 de la semelle inférieure 4.

Selon l'invention, la semelle 4 est munie d'un élément de liaison 10 formant un surface horizontale, s'étendant parallèlement à la semelle supérieure 2. L'élément de liaison 10 relie les deux pieds obliques 7, 8. Plus précisément, deux rebords de jonction de la surface horizontale 10, opposés l'un de l'autre, sont solidaires des extrémités basses des pieds obliques 7, 8, opposées aux extrémités hautes situées au niveau du noeud de jonction 6. L'élément de liaison 10 referme la structure de la semelle inférieure 4, qui dans l'état de la technique était ouverte en V inversé. La semelle inférieure 4 selon l'invention délimite un volume fermé. La section transversale de la semelle inférieure 4 a une forme générale triangulaire.

La jonction entre l'élément de liaison 10 et chacun des pieds obliques 7, 8 forme un rayon 11, 12 par lesquels les efforts d'arrachement F1 et de compression F2 transitent pour être rebouclés au niveau de l'élément de liaison 10. Par rayon, on entend que la liaison ne forme pas un angle aigu mais un arrondi, moins susceptible de se rompre. Ainsi, la poutre 1 selon l'invention ne risque plus de se rompre au niveau du noeud de jonction 6 lorsqu'il est soumis aux efforts F1, F2. Les surfaces d'appui 14 et 15 étant reliées à la surface horizontale 10, les mouvement du noeud de jonction 6 sont limités.

Sur les figures 4A et 4B est représenté un deuxième exemple de réalisation d'une poutre 20 pour plancher pressurisé.

Dans la mesure où seule la semelle inférieure 22 de la poutre 20 est modifiée, l'âme verticale 21 n'est que représentée que partiellement, le reste de la poutre 20 n'étant pas représenté.

La semelle inférieure 22 comporte deux pieds obliques 23, 24 disposés de part et d'autre de l'âme verticale 21, formant chacun une surface d'appui pour une membrane courbe 9 du plancher pressurisé. La semelle inférieure 22 comporte également un élément de liaison 25 formant une surface horizontale. Comme exposé plus haut, chaque rebord de liaison de la surface horizontale 25 est relié à une extrémité basse d'un pied oblique 23, 24, de manière à ce que la zone de liaison forme un rayon 26, 26' par lequel les efforts transitent.

L'âme verticale 21 de la poutre 20 se prolonge au-delà du noeud de jonction 27 par une barre verticale 28 qui traverse entièrement le volume interne 29 de la section fermée formée par la semelle inférieure 22. Le volume interne 29 est délimité respectivement par les surfaces d'appui des pieds obliques et la surface horizontale 25. La section triangulaire de la semelle 22 est traversée depuis son sommet, formé par le noeud de jonction 27, jusqu'à la surface horizontale 25 par la barre verticale 28.

En divisant le volume interne 29 en deux, la barre verticale 28 permet de réduire les efforts F2 s'exerçant sur chacun des pieds obliques 24, 26. Les efforts F2 ne sont que partiellement repris par les rayons 26, 27, l'autre partie desdits efforts F2 étant repris au niveau de la barre verticale 28. On augmente ainsi la résistance de la semelle inférieure 22 aux efforts de compression auxquels la poutre 20 peut être soumise.

Sur les figures 5A et 5B est représenté un autre exemple de réalisation d'une poutre 30.

L'élément de liaison 33 entre les pieds obliques 34, 35 de la semelle inférieure 32 comporte deux surfaces planes, également obliques, respectivement 36 et 37. Chaque surface oblique 36, 37 est solidaire, par un rebord de jonction, de l'extrémité basse du pied oblique 34, 35 ayant une orientation opposée. Chaque zone de jonction entre une surface oblique 36, 37 et un pied oblique 34, 35 forme un rayon 38, 39 par lequel les efforts s'exerçant sur les surface d'appui courbes des pieds obliques 34, 35 sont aptes à transiter. Les deux surfaces obliques 36, 37 sont reliées l'une à l'autre au niveau des rebords opposés, de manière à former un second noeud de jonction 40. Le volume interne 42 de la section fermée de la semelle inférieure 32, délimité par les pieds obliques 34, 35 et les deux surfaces obliques 36, 37, a une forme générale en losange.

Dans l'exemple représenté sur les figures 5A et 5B, l'âme verticale 31 de la semelle 30 se prolonge au-delà du noeud de jonction 41 par une barre verticale 43. La barre verticale 43 traverse le volume interne 42 de la section fermée 32. La barre verticale 43 est solidaire des deux pieds obliques 34, 35 au niveau du premier noeud de jonction 41, et des deux surfaces obliques 36, 37 au niveau du second point de jonction 40. La barre verticale 43 est apte à reprendre au moins partiellement les efforts s'exerçant sur les surfaces d'appui courbes des pieds obliques 34, 35.

Comme cela est représenté sur les figures 3, 4B et 5B, il est possible de ménager un ou plusieurs orifices traversants 13 sur l'élément de liaison 10, 25, 33 reliant les pieds obliques 7, 8, 23, 24, 34, 35. Les orifices 13 permettent d'accéder au volume interne 29, 42 de la section fermée formée par la semelle inférieure 4, 22, 32 depuis l'élément de liaison 10, 25, 33. On accède ainsi facilement aux moyens de fixation solidarisant les membranes courbes 9 aux pieds obliques correspondants. Par ailleurs, en multipliant le nombre d'orifices traversant 13 on diminue la masse totale de l'ensemble de la structure formant la poutre du plancher selon l'invention.

Dans le cas où le volume interne 29, 42 de la section fermée formée par la semelle inférieure 22, 32 est divisée en deux par une barre verticale 28, 43, on ménage avantageusement deux rangées d'orifices traversants 13, de manière à avoir des orifices traversants 13 qui débouchent dans chacun des deux demi-volumes interne de la semelle inférieure 22, 32. Les orifices traversants 13 sont avantageusement répartis régulièrement sur l'élément de liaison de la semelle inférieure de manière à permettre un accès facile au niveau de chaque point de fixation des membranes courbes 9 à la semelle inférieure 4, 22, 32.

Avantageusement, dans le cas où la poutre est réalisée en matériau composite, il est possible de prévoir un renfort disposé dans le volume interne de la section fermée formée par la semelle inférieure, de manière à reprendre partiellement les efforts auxquels les surfaces d'appui des pieds obliques sont soumises.

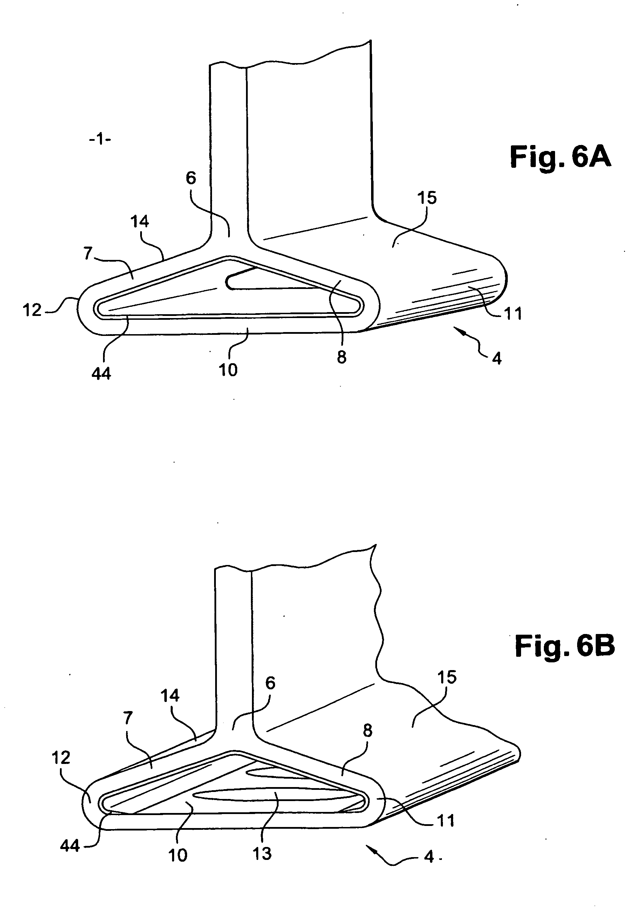

Dans l'exemple représenté à la figure 6A, le renfort 44 a une section triangulaire. Le contour externe du renfort 44 suit un contour interne du volume interne de la section fermée triangulaire de la semelle inférieure 4, et épouse exactement la paroi interne des surfaces d'appui 14, 15 et de la surface horizontale 10 délimitant le volume interne de la section fermée.

Dans le cas où la surface horizontale 10 est munie d'orifices traversants (non représentés sur la figure 6A), le renfort 44 est avantageusement muni de trous similaires, destinés à coïncider avec les orifices traversants de la surface horizontale 10, de manière à laisser un accès au volume interne.

Dans le cas où le renfort 44 est en matériau composite, on utilise principalement des fibres orientées à 90° et +/- 45°, en diminuant au maximum la quantité de fibres à 0°, puisque les fib res dans cette orientation, c'est-à-dire s'étendant dans le prolongement de l'axe longitudinal de la poutre, ne sont pas destinées à travailler lorsque la semelle inférieure 4 est soumise aux efforts de compression F2 et d'arrachement F1. On crée ainsi une continuité de fibres entre les fibres des pieds obliques 23, 24 de la poutre en matériau composite, ce qui permet de renforcer le noeud de jonction 6 des deux pieds 7, 8.

Dans l'exemple représenté à la figure 6B, le renfort 44 ne suit pas entièrement le contour interne de la section fermée triangulaire de la semelle inférieure 4. En effet, le renfort 44 est formé d'une préforme épousant seulement la paroi interne des pieds obliques 7, 8 et des rayons 11, 12. La préforme n'a pas une section fermée, puisqu'elle ne recouvre pas la paroi interne de la surface horizontale 10. Une telle solution donne également des résultats satisfaisants, puisque ce sont principalement le noeud de jonction 6 et les rayons 11, 12 qui sont destinés à reprendre les efforts.

Bien entendu un tel renfort 44 peut être utilisé de manière similaire avec les autres exemples de réalisation représentés aux figures 4A et 5A.

Dans le cas où la poutre 1, 20, 30 est réalisée en matériau composite, elle peut être faite de manière classique par injection ou infusion de résine. La section fermée creuse est réalisée en utilisant un noyau extractible ou soluble. On utilise préférentiellement du carbone époxy dont les fibres de carbone sont orientées dans les quatre directions, à savoir 0°, 90°et +/- 45°. Il est également possible de réaliser de telles poutres en utilisant des fibres pré-imprégnées.

## Revendications

1. Plancher pressurisé pour tronçon d'aéronef muni d'une case de train principal comportant des poutres longitudinales (1, 20, 30) et des membranes pressurisées courbes (9) destinées à assurer l'étanchéité dudit plancher avec l'extérieur, chaque poutre comportant une semelle supérieure (2) sur laquelle est fixée un panneau plancher (10), une âme verticale (3, 21, 31) et une semelle inférieure (4, 22, 32), la semelle inférieure étant munie de deux pieds obliques (7, 8. 23, 24, 34, 35) disposés de part et d'autre de l'âme verticale et présentant une surface d'appui (14, 15) sur laquelle les membranes pressurisées courbes sont fixées, **caractérisé en ce que** les poutres sont en matériau composite et **en ce que** la semelle inférieure des poutres comporte un élément de liaison (10, 25, 33) reliant les deux pieds obliques, de manière à ce que ladite semelle inférieure présente une section fermée.

2. Plancher selon la revendication 1, **caractérisé en ce que** l'élément de liaison comporte une surface horizontale (25), deux rebords opposés de ladite surface horizontale étant chacun solidaires d'une extrémité basse d'un pied oblique, de manière à ce que la section fermée forme un triangle.

3. Plancher selon la revendication 1, **caractérisé en ce que** l'élément de liaison comporte deux surfaces obliques (36, 37), un rebord de liaison de chaque surface oblique étant solidaire d'une extrémité basse d'un pied oblique, les deux surfaces obliques étant solidaires l'une de l'autre par leurs rebords de convergence, opposés aux rebords de liaison, de manière à ce que la section fermée forme un losange.

4. Plancher selon l'une des revendications 1 à 3, **caractérisé en ce que** l'âme verticale traverse la section fermée.

5. Plancher selon l'une des revendications 1 à 4, **caractérisé en ce que** la section fermée est creuse.

6. Plancher selon la revendication 5, **caractérisé en ce que** la semelle inférieure comporte un renfort (44) logé dans le volume interne de la section fermée.

7. Plancher selon la revendication 6, **caractérisé en ce que** le contour externe du renfort épouse le contour interne de la section fermée.

8. Plancher selon la revendication 6, **caractérisé en ce que** le contour externe du renfort épouse le contour interne des surfaces d'appui et des rebords de liaison de l'élément de liaison.

9. Plancher selon l'une des revendications 6 à 8, **caractérisé en ce que** le renfort est en matériau composite.

10. Plancher selon l'une des revendications 1 à 9, **caractérisé en ce que** l'élément de liaison comporte au moins un orifice traversant (13) débouchant dans le volume interne de la section fermée.

## Claims

1. A pressure-sealed floor for a section of an aircraft provided with a main landing gear bay comprising longitudinal girders (1, 20, 30) and curved pressurised diaphragms (9) intended to seal said floor from the outside, each girder comprising a top flange (2) onto which a floor panel (10) is attached, a vertical web (3, 21, 31) and a bottom flange (4, 22, 32), the bottom flange being provided with two angled legs (7, 8, 23, 24, 34, 35) arranged on either side of the vertical web and having a supporting surface (14, 15) onto which the curved pressurised diaphragms are attached, **characterised in that** the girders are made from a composite material and **in that** the bottom flange of the girders comprises a connecting element (10, 25, 33) joining the two angled legs in such a way that said bottom flange has a closed cross-section.

2. A floor according to claim 1, **characterised in that** the connecting element comprises a horizontal surface (25), two edges opposite said horizontal surface each being connected to a lower end of an angled leg in such a way that the closed cross-section forms a triangle.

3. A floor according to claim 1, **characterised in that** the connecting element comprises two angled surfaces (36, 37), a connecting edge of each angled surface being connected to a lower end of an angled leg, the two angled surfaces being connected to each other by their convergent edges, opposite the connecting edges, in such a way that the closed cross-section forms a rhomb.

4. A floor according to one of claims 1 to 3, **characterised in that** the vertical web passes through the closed cross-section

5. A floor according to one of claims 1 to 4, **characterised in that** the closed cross-section is hollow.

6. A floor according to claim 5, **characterised in that** the bottom flange comprises a reinforcing part (44) housed in the inner volume of the closed cross-section.

7. A floor according to claim 6, **characterised in that** the outer contour of the reinforcing part fits the shape of the inner contour of the closed cross-section.

8. A floor according to claim 6, **characterised in that** the outer contour of the reinforcing part fits the shape of the inner contour of the support surfaces and connecting edges of the connecting element.

9. A floor according to one of claims 6 to 8, **characterised in that** the reinforcing part is made from a composite material.

10. A floor according to one of claims 1 to 9, **characterised in that** the connecting element comprises at least one penetrating orifice (13) opening into the inner volume of the closed cross-section.

## Patentansprüche

1. Druckdichter Boden für einen Luftfahrzeugabschnitt, der mit einem Fach des Hauptfahrwerks versehen ist, umfassend Längsträger (1, 20, 30) und druckdichte gekrümmte Membrane (9), die dazu bestimmt sind, den besagten Boden nach außen hin abzudichten, wobei jeder Träger eine obere Sohle (2) umfasst, auf der eine Bodenplatte (10) befestigt wird, einen senkrechten Steg (3, 21, 31) und eine untere Sohle (4, 22, 32), wobei die untere Sohle mit zwei schräg angeordneten Füßen (7, 8, 23, 24, 34, 35) versehen ist, die beiderseits des senkrechten Steges angeordnet sind, und eine Auflagefläche (14, 15) aufweisen, auf der die druckdichten gekrümmten Membrane (9) befestigt sind, **dadurch gekennzeichnet, dass** die Träger aus Verbundmaterial gefertigt sind, und dadurch, dass die untere Sohle der Träger ein Verbindungselement (10, 25, 33) umfasst, das die beiden schräg angeordneten Füße miteinander verbindet, sodass die besagte untere Sohle einen geschlossenen Abschnitt aufweist.

2. Boden nach Anspruch 1, **dadurch gekennzeichnet, dass** das Verbindungselement eine waagrechte Fläche (25) aufweist, wobei die beiden einander gegenüberliegenden Ränder der besagten waagrechten Fläche jeweils kraftschlüssig mit einem unteren Ende eines schräg angeordneten Fußes verbunden sind, sodass der geschlossene Abschnitt ein Dreieck bildet.

3. Boden nach Anspruch 1, **dadurch gekennzeichnet, dass** das Verbindungselement zwei schräge Flächen (36, 37) umfasst, wobei ein Verbindungsrand einer jeden schrägen Fläche kraftschlüssig mit einem unteren Ende eines schräg angeordneten Fußes verbunden ist, und die beiden schrägen Flächen über ihre zusammenlaufenden Ränder, die gegenüber den Verbindungsrändern liegen, kraftschlüssig miteinander verbunden sind, sodass der geschlossene Abschnitt ein Parallelogramm bildet.

4. Boden nach einem der Ansprüche 1 bis 3, **dadurch gekennzeichnet, dass** der senkrechte Steg durch den geschlossenen Abschnitt führt.

5. Boden nach einem der Ansprüche 1 bis 4, **dadurch gekennzeichnet, dass** der geschlossene Abschnitt hohl ist.

6. Boden nach Anspruch 5, **dadurch gekennzeichnet, dass** die untere Sohle eine Verstrebung (44) umfasst, die im Innenvolumen des geschlossenen Abschnitts untergebracht ist.

7. Boden nach Anspruch 6, **dadurch gekennzeichnet, dass** die Außenkontur der Verstrebung an der Innenkontur des geschlossenen Abschnitts anliegt.

8. Boden nach Anspruch 6, **dadurch gekennzeichnet, dass** die Außenkontur der Verstrebung an der Innenkontur der Auflageflächen und der Verbindungsränder des Verbindungselements anliegt.

9. Boden nach einem der Ansprüche 6 bis 8, **dadurch gekennzeichnet, dass** die Verstrebung aus Verbundmaterial gefertigt ist.

10. Boden nach einem der Ansprüche 1 bis 9, **dadurch gekennzeichnet, dass** das Verbindungselement zumindest eine durchgehende Öffnung (13) umfasst, die ins Innenvolumen des geschlossenen Abschnitts mündet.
